# EUROPÄISCHE PATENTSCHRIFT

(11) **EP 0 618 765 B1**
(45) Veröffentlichungstag und Bekanntmachung des Hinweises auf die Patenterteilung: **12.03.1997**
(21) Anmeldenummer: 93900098.0
(22) Anmeldetag: 16.12.1992
(51) Int. Cl.: A01D 34/84, A01D 34/00, A01G 3/06

(54) **SAUGMÄHER MIT EINER EINRICHTUNG FÜR DAS ERZEUGEN EINES SAUGLUFTSTROMES**
SUCTION LAWN MOWER WITH SUCKING AIR FLOW GENERATOR
TONDEUSE ASPIRATRICE A GENERATEUR DE COURANT D'AIR D'ASPIRATION

(30) Priorität: 16.12.1991 CH 3708/91
(43) Veröffentlichungstag der Anmeldung: 12.10.1994
(73) Patentinhaber: POSCH, Leopold, 3200 Obergrafendorf (AT)
(72) Erfinder: POSCH, Leopold, 3200 Obergrafendorf (AT)
(74) Vertreter: Kaminski, Susanne, Dr.
(86) Internationale Anmeldenummer: EP9202923
(87) Internationale Veröffentlichungsnummer: WO9311659

(56) Entgegenhaltungen:
- EP-A- 0 047 416
- WO-A-91/17649
- DE-A- 2 626 201
- DE-B- 2 643 604
- GB-A- 498 393
- GB-A- 2 144 018
- US-A- 2 630 665
- US-A- 4 642 976
- US-A- 4 718 221
- US-A- 4 936 886
- US-A- 5 020 309

## Beschreibung

Die Erfindung betrifft einen Saugmäher nach dem Oberbegriff des Anspruches 1. Ein derartiger Saugmäher ist aus der US-A-5 020 309 bekannt. Darüber hinaus sind Saugmäher als Grasmäheinrichtungen zu verstehen, die in irgendeiner Form die Luftbewegung mähunterstützend einsetzen. Saugmäher sind herkömmliche Mäheinrichtungen, wie beispielsweise in der DE B1 2643604. Die DE B1 zeigt einen Saugrüssel mit einer Eintrittsöffnung und einer Austrittsöffnung, an dem ein Sauggebläse angeordnet ist, das Gras durch die Eintrittsöffnung in das Gehäuse zu saugen vermag. Die Vorrichtung gemäss DE B1 hat im Gegensatz zu anderen herkömmlichen Rasenmähern mit rotierenden Messern, die parallel über dem Boden geführt werden, wie beispielsweise gemäss der US A 4718221 den Vorteil, dass ihre Eintrittsöffnung in einem Winkel zur Normalwuchsrichtung des Grases verschwenkbar ist. Das Mähwerk zum Abschneiden der Grashalme kann dabei vor der Eintrittsöffnung in Form einer Häckslerwalze in einer Saugglocke angeordnet sein (Spalte 1, Zeile 60-64). Es kann aber auch in einer Grasabsaugdüse - unmittelbar bei der Eintrittsöffnung - eingebaut sein (Spalte 3 Zeile 63-64).

Häckslerwalzen sind unförmige Walzen mit einer Vielzahl von Messern, die nur für spezielle, grossflächige Mähvorgänge zum Einsatz gelangen. Ihre Antriebe sind jedoch schwer und die Wälzen selbst dienen eher zum Zerkleinern von Gras als zum sauberen Abschneiden desselben.

Der Erfindung liegt somit die Aufgabe zugrunde, ein einfaches Mähwerkzeug zu finden, das die Häckslerwalzen ersetzt. Die naheliegende Lösung dafür sind rotierende Schneidmesser, wie sie bei den erwähnten herkömmlichen Rasenmähern angewendet werden. Eine solche naheliegende Lösung löst jedoch nicht den Nachteil des zusätzlichen Antriebes, der - wie bei den bekannten Häckslerwalzen - für das rotierende Schneidmesser erforderlich ist. Daher stellt sich der Erfindung die zusätzliche Aufgabe, das Antriebssystem für den Saugmäher insgesamt zu vereinfachen.

Beide Aufgaben werden überraschend einfach durch die Anwendung der Merkmale des Anspruches 1 gelöst.

Durch die erfindungsgemässe Ausbildung des Schneidwerkzeuges kann entweder auf das Sauggebläse (Variante gemäss Anspruch 2), oder auf den separaten Antrieb für das Schneidwerkzeug (Variante gemäss Anspruch 3) verzichtet werden.

Zwar sind bei einigen herkömmlichen Rasenmähern ventilatorähnliche Aufsätze bei Mäheinrichtungen bekannt, jedoch dienen diese dem Austragen des abgeschnittenen Grases z.B. in einen Grasfangsack, oder zum radlosen Abstandhalten der Mäheinrichtung über dem Boden, indem ein Art Luftpolster erzeugt wird. Das Ansaugen von Gras in einem Winkel zur Normalwuchsrichtung, wie bei der Anordnung gemäss DE B1 ist jedoch nicht möglich.

Damit unterscheiden sich herkömmliche Rasenmäher mit Messern, die einen Luftstrom erzeugen, nur geringfügig von anderen Rasenmähern - zumindest in bezug auf deren Erfassungsvermögen von Grashalmen oder dgl. in Bereichen von Mauern, Baumstümpfen, Sträuchern, Zäunen, Strassenrandpfählen usw.

Für das Abschneiden von Gräsern im Bereich solcher mehr oder weniger starrer Hindernisse sind herkömmliche Rasenmäher (mit Ausnahme von Motorsensen) kaum verwendbar. Zum einen behindern Räder, Schutzbleche und sonstige Aufbauteile des Rasenmähers ein knappes Heranfahren an die betreffenden Hindernisse, zum anderen ist vor allem bei Strassenrandpfählen das Rundherumfahren oft mühsam und durch bauliche Gegebenheiten behindert.

Die Saugwirkung herkömmlicher Saugmäher nützt dort praktisch nichts, da ihr Wirkungsbereich den Platz unmittelbar unter dem Rasenmäher kaum überschreitet.

Der Erfindung löst somit auch einfachst diese zusätzliche Aufgabe. Sie kann gegebenenfalls allein, oder als Zusatz zu herkömmlichen Rasenmähern, verwendet werden und kann vor allem Randbereiche neben festen Hindernissen optimal vom Gras oder dgl. befreien soll. Das Nacharbeiten mit Handscheren, eigenen Freischneideinrichtungen usw. kann dadurch entfallen.

Daraus ergibt sich insbesondere auch der Vorteil des berührungsfreien, seitlichen Annäherns an abzumähendes Gras. Bei der Erfindung bewegt sich gewissermassen das Gras zur Mäheinrichtung, während beim herkömmlichen Rasenmähern z.B. gemäss der US A die Mäheinrichtung zum Gras bewegt, bzw. auf das Gras gestellt werden muss. Weiters ergibt sich eine gewisse Verschleissarmut beim Mähwerkzeug, insbesondere aber ein Schutz von Sträuchern, Baumrinden, Fassaden usw., da diese während des Mähens lediglich mit einem Saugluftstrom in Berührung kommen, und nicht wie bei herkömmlichen Häckslerwalzen automatisch erfasst und abgeschnitten oder zumindest beschädigt werden.

Weitere Merkmale und Ausbildungen sowie Varianten der Erfindung sind in den abhängigen Ansprüchen beschrieben.

Es ergeben sich die folgenden Vorteile und Anwendungsmöglichkeiten:

Durch den Stellwinkel von höchstens 80° reicht die Saugkraft über den Bereich des Rasenmähers hinaus und kann z.B. Grashalme, Sträucher usw. in annähernd parallele Richtung zum Erdboden ansaugen und entsprechend abschneiden. Unter Normalwuchsrichtung ist im wesentlichen die Senkrechte auf den Erdboden zu verstehen. Vor allem längere Grashalme, die in Bodennähe über einen relativ starken Stamm verfügen, werden durch die Erfindung oben, wo sie noch flexibel sind, erfasst und in den Rasenmäher hineingezogen, wo sie abgeschnitten werden.

Je kleiner der Stellwinkel wird, je näher er sich 0° nähert, um so weiter ist die Tiefenwirkung entlang des Erdbodens durch den erfindungsgemässen Saugmäher. So können beispielsweise auch Grashalme rund um einen Strassenbegrenzungspfahl mit einem Mal durch den Saugluftstrom erfasst und abgeschnitten werden. Das Rundherumfahren um einen solchen Pfahl kann entfallen. Die Praxis zeigt, dass die daraus folgenden geringen Höhenunterschiede bei den abgeschnittenen Halmen tolerierbar sind.

Montiert auf einem herkömmlichen Rasenmäher ergibt sich somit eine vorteilhafte Kombination, mit der sich an sämtlichen Stellen das Gras optimal mähen lässt. Darüber hinaus ist das Einsammeln von Laub od.dgl. wie bei einem Staubsauger möglich, wozu auch eine abnehmbare Zusatzsaugglocke vorgesehen sein kann.

Der Montageort an einem herkömmlichen Rasenmäher kann beliebig gewählt werden. Insbesondere kann er zwischen den vorderen oder hinteren Rädern gewählt sein. Die Erfindung kann auch vollständig in das Gehäuse des Rasenmähers integriert werden, wobei die Anordnung im Felgenraum eine besonders elegante, kompakte Lösung darstellt.

Die Montage der Erfindung an einer Freischneideinrichtung erlaubt das noch flexiblere Vorgehen im Bereich von Mauernischen usw., wobei dort insbesondere die Saugwirkung als vorteilhaft und mähunterstützend anzusehen ist.

Das Verwenden eines rohrförmigen Gehäuses entspricht den in der Regel anzuwendenden rotierbaren Messern und Luftsaugstromerzeugern (z.B. Ventilatorblättern), wobei die Austrittsöffnung günstig so gebildet ist, dass einerseits das abgeschnittene Gras bestens abgeführt wird und andererseits eine Berührung mit den rotierenden Teilen ausgangsseitig vermeidbar ist.

Selbstverständlich liegen im Rahmen der Erfindung auch andere Messer oder Lufterzeuger, beispielsweise in der Art von radialen Walzen-Luftgebläsen.

Ein Berührungsschutz für die Gehäuseeintrittsöffnung dient vor allem dem Abhalten von gröberem Buschwerk, das nicht abgeschnitten werden soll, aber auch dem Abhalten von Haustieren, unbeabsichtigten Eingriffen durch Menschenhände usw.

Die Ausbildung mit Rutschkupplung erhöht ebenso die Sicherheit und vermeidet das Abwürgen des jeweiligen Antriebsmotors.

Die einstückige Ausbildung gemäss Anspruch 2 baut sehr kompakt und verfügt über nur wenige Einzelteile, während eine verstellbare Abdeckung der Eintrittsöffnung eine willkürliche Veränderung des Saugluftstromes ermöglicht und einen Schutz für rotierende Messer bildet.

Die Sicherheit für den Betrieb wird durch die Massnahmen des Anspruches 10 weiter erhöht.

Die Variante nach Anspruch 3 stellt einen Aufbau dar, der einen separaten Antrieb für die Schneideinrichtung vermeidet und gleichzeitig einen Rutschkupplungseffekt bei der Schneideinrichtung erzielt. Die Schneideinrichtung muss dort selbstverständlich entsprechend der Dimension des Saugrohres und der Quantität des Saugluftstromes dimensioniert sein. Diese Lösung hat den Vorteil, den Antrieb für die Erzeugung des Saugluftstromes vom Ort des Abschneidens der Grashalme räumlich zu trennen. Eine Anordnung dieser Mähvorrichtung insbesondere im Saugrüssel gemäss der DE B1 wäre denkbar.

Anhand der Zeichnung wird die Erfindung beispielhaft näher erläutert.

Es zeigen dabei
- Fig.1 und 2: einen herkömmlichen Rasenmäher mit einem erfindungsgemässen Zusatz;
- Fig.3 und 4: einen erfindungsgemässen Saugmäher, wie er beispielsweise an Motorsensen vorgesehen sein kann;
- Fig.5 und 6: ein Strassenrandmähgerät, und
- Fig.7: ein Detail eines erfindungsgemässen Zusatzgerätes für einen herkömmlichen Rasenmäher beim Einsatz an einem Strassenrandpfahl.

Die Figuren werden übergreifend und zusammenhängend beschrieben, gleiche Teile tragen gleiche Bezugszeichen, ähnliche Teile sind mit gleichen Bezugszeichen, aber unterschiedlichen Indizes markiert.

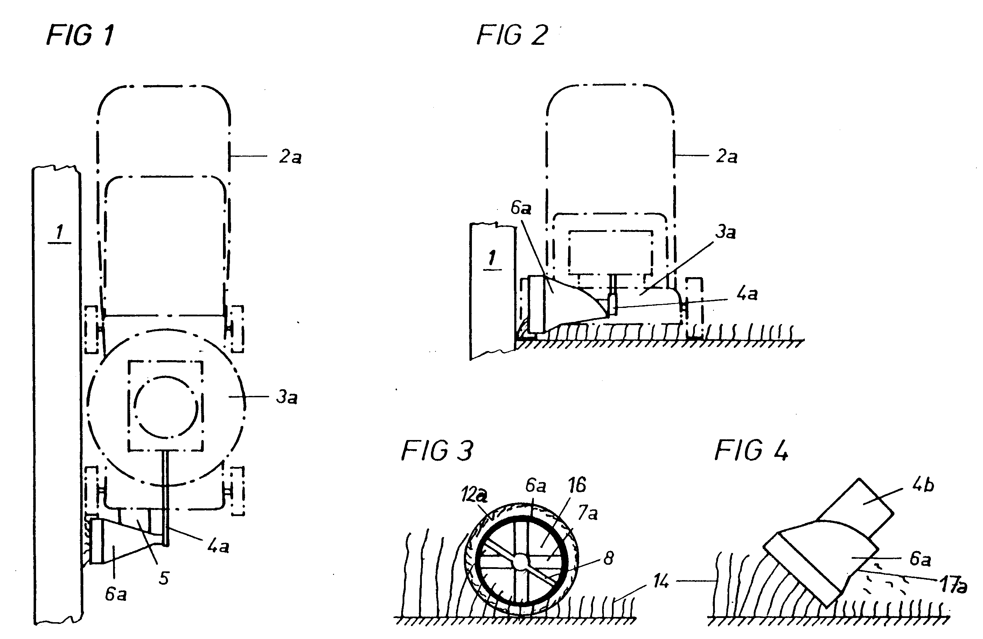

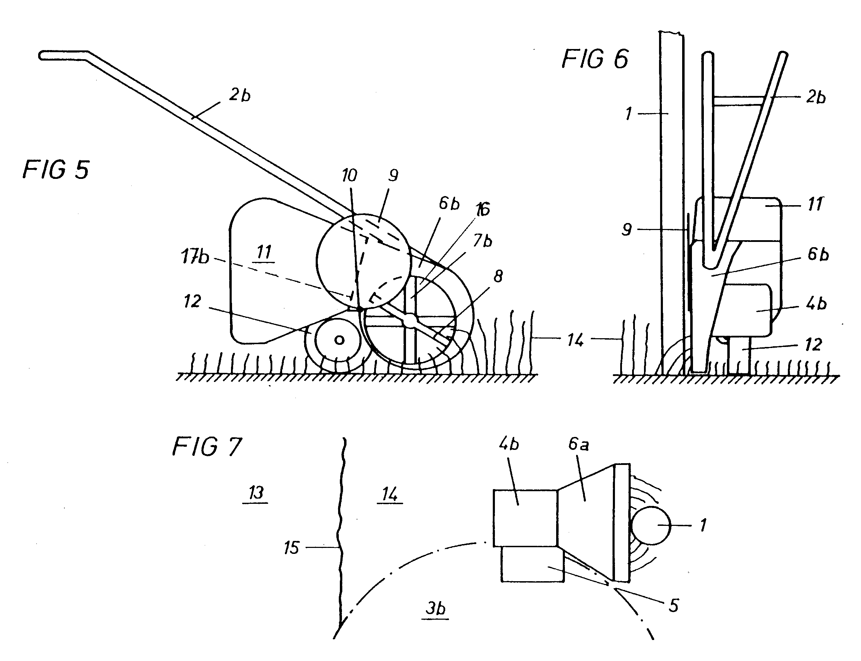

Für das Mähen von Gräsern oder dgl. an Mauern, Bäumen, Sträuchern, Gartenzäunen, Strassenrandpfählen 1 usw. wird die Erfindung optimal eingesetzt. Durch das Schrägstellen der Gehäuseeintrittsöffnung 16 (Fig.3) wird Gras 14 aus der Senkrechten in die Gehäuseeintrittsöffnung 16 gesaugt und dort durch eine Schneideinrichtung 7 geschnitten. Ein die Schneideinrichtung 7 umgebendes Gehäuse 6 ist entweder für axialen Grasauswurf (6a gem. Fig.1-4 und 7) oder für radialen Grasauswurf (6b gem. Fig.5 und 6) ausgebildet.

Die Anbringung eines erfindungsgemässen Saugmähers an einem herkömmlichen Rasenmäher 3a (Fig.1 und 2) ist dann von Vorteil, wenn in erster Linie grössere Grasflächen zu mähen sind und erst in zweiter Linie auch Bereiche entlang von Mauern 1 usw. vom Gras 14 gesäubert werden müssen. Ein herkömmlicher Rasenmäher 3a wird dabei - wie üblich - über einen Rasenmäherschubbügel 2a geschoben oder gezogen.

Das Gehäuse 6a ist so montiert, dass die Gehäuseeintrittsöffnung 16 in die Nähe der Mauer 1 gebracht werden kann. Die Befestigung erfolgt über eine Halterung 5, die verstell- oder verschiebbar ist, um den Mäher auf die entsprechenden Bedingungen einstellen zu können.

Insbesondere kann durch eine solche Halterung 5 auch der Anstellwinkel der Gehäuseeintrittsöffnung variierbar sein.

Der Antrieb des erfindungsgemässen Saugmähers erfolgt im Fall der Fig.1 und 2 durch einen Riemen oder eine flexible Welle 4a vom Motor des herkömmlichen Rasenmähers 3a, in den übrigen Fällen durch einen eigenen Antriebsmotor 4b, der durch Verbrennungskraft, elektromotorische Kraft, hydraulisch oder durch einen Saugluftstrom oder dgl. Drehkraft erzeugt.

Die Gehäuseeintrittsöffnung 16 ist durch Schutzstäbe 8 berührungsgeschützt, so dass grossvolumige Teile von der Schneideinrichtung abgehalten werden können.

Die Variante nach Fig.5 und 6 entspricht einem Spezialgerät für das Mähen an Strassenrändern, Mauerwänden, Zäunen od.dgl. Die Gehäuseaustrittsöffnung 17b mündet dort in einen Fangsack oder Korb 11. Eine schwenkbare Abdeckung 9 ermöglicht das Reduzieren der Gehäuseeintrittsöffnung 16 zur Variation des Luftsaugstromes. Sie ist um einen Drehpunkt 10 schwenkbar. Im Rahmen der Erfindung liegen jedoch auch beliebig andere Abdeckvariationen, wie beispielsweise Schiebebleche oder dgl.

Das Strassenrandmähgerät 3b ist auf - vorzugsweise höhenverstellbaren - Rädern 12 schiebbar. Schubstangen 2b ermöglichen die Führung.

Die Variante nach Fig.7 zeigt wiederum einen Rasenmäheraufbau mit erfindungsgemässem Zusatz Saugmäher für Strassenrandbereiche mit grösseren Rasenflächen 14 neben dem Strassenrand 15 bzw. neben der Fahrbahn 13. Im Unterschied zu der Variante nach Fig. 1 und 2 verfügt ein solcher Saugmäher über einen eigenen, z.B. hydraulischen Antrieb 4b, der beispielsweise auch eine unterschiedliche Saugkraftsteuerung durch Drehzahlvariation erlaubt. Solche Grasmäher sind häufig an z.B. selbstfahrenden Kommunalgeräten montiert. Die Halterung 5 kann beispielsweise entlang des strichpunktiert dargestellten Bogens um den Rasenmäher 3b verstellt, z.B. hydraulisch verschwenkt werden, wodurch beliebig auf spezielle Gegebenheiten am jeweiligen Strassenrand eingegangen werden kann. Eine elegante Lösung ist demgegenüber in Fig.3 zu sehen, wo die Gehäuseeintrittsöffnung in ein Rad 12a integriert ist.

Wie nicht näher dargestellt, jedoch in den Ansprüchen beschrieben, können auch besondere Sicherheitsvorrichtungen und Einrichtungen vorgesehen sein, um die Gefährdung des Bedienpersonals, von Tieren usw. zu reduzieren, bzw. um die Messer zu schonen (im Falle der Anwendung von Freilaufeinrichtungen). Die Erfindung kann mit Vorteil auch als Gebläse oder Laubsauggerät verwendet werden. Für den ersten Fall kann eine Drehumkehr der Einrichtung zur Erzeugung des Saugluftstromes vorgesehen sein. Wenn die Austrittsöffnung des Gehäuses mit der Schneideinrichtung entsprechend einem Ausführungsbeispiel in den Mähraum des Gehäuses eines Rasenmähers mündet, ergibt sich der Vorteil, dass das Gras gegebenenfalls nochmals zerkleinert wird und jedenfalls durch die Rasenmähermäheinrichtung weiter, z.B. in einen Grassammelkorb transportiert wird.

### BEZUGSZEICHENLISTE

- 1.: Mauer, Baum, Strauch, Gartenzaun, Strassenrandpfähle
- 2a.: Rasenmäherschubbügel
- 2b.: Schubstangen
- 3a.: Rasenmäher oder ähnliches
- 3b.: Strassenrandmähgerät
- 4a.: Antrieb mit Riemen, flexibler Welle, u.s.w.
- 4b.: E-Motor, Benzinmotor, Hydromotor, u.s.w.
- 5.: Halterung (verstell- oder verschiebbar in jede Richtung)
- 6a.: Gehäuse für axialen Auswurf
- 6b.: Gehäuse für Radialauswurf
- 7a.: Ventilator (Messer) inkl. Schneideinrichtung für Achsialwurf
- 7b.: Ventilator (Messer) inkl. Schneideinrichtung für Radialauswurf
- 8.: Schutzstäbe
- 9.: Abdeckung verstellbar (für weniger Sog oder mehr Sicherheit)
- 10.: Drehpunkt für Abdeckung
- 11.: Fangsack oder Korb
- 12.: 12a. Ein oder mehrere Räder auch höhenverstellbar
- 13.: Fahrbahn
- 14.: Gras
- 15.: Strassenrand
- 16.: Gehäuseeintrittsöffnung
- 17a,b: Gehäuseaustrittsöffnung

## Patentansprüche

1. Saugmäher mit einem Gehäuse (6),
einer Einrichtung für das Erzeugen eines Saugluftstromes zum Transportieren von abgeschnittenen Grashalmen (14) innerhalb des Mähers,
mit einer Gehäuseeintrittsöffnung (16), sowie mindestens einer Schneideinrichtung unmittelbar hinter der Gehäuseeintrittsöffnung (16) zum Abschneiden der Grashalme,
wobei die Schneideinrichtung wenigstens ein Messer (7) aufweist,
und wobei in der Betriebsstellung der Minimalabstand der Gehäuseeintrittsöffnung zum Boden durch Abstandhalter begrenzt ist, so dass die Gehäuseeintrittsöffnung im Betriebsfall der Kontur des Bodens folgt, **dadurch gekennzeichnet**,
dass die durch die Gehäuseeintrittsöffnung (16) definierte Ebene in der Betriebsstellung des Saugmähers in einem Stellwinkel von kleiner als 80°, zur Normalwuchsrichtung der Grashalme (14) liegt,
und dass die Einrichtung zur Erzeugung des Saugluftstroms, so leistungsstark ist, dass sich im Betriebszustand noch nicht gemähtes Gras aus dar Umgebung der Gehäuseeintrittsöffnung (16) in diese neigt.

2. Saugmäher nach Anspruch 1, dadurch gekennzeichnet, dass das die Schneideinrichtung bzw. das Messer (7) Teil der erwähnten Einrichtung ist, mechanisch antreibbar ist und im Betriebszustand vorzugsweise allein den Saugluftstrom erzeugt.

3. Saugmäher nach Anspruch 1, dadurch gekennzeichnet, dass die Einrichtung für das Erzeugen eines Saugluftstromes und das Messer (7) innerhalb eines insbesondere rohrförmigen Gehäuses (6) angeordnet sind, wobei das Messer (7) freilaufend gelagert ist und durch den Saugluftstrom antreibbar ist.

4. Saugmäher nach einem der vorhergehenden Ansprüche, dadurch gekennzeichnet, dass der Stellwinkel kleiner als 20° ist, und/oder, dass er durch einen Stellmechanismus variierbar ist.

5. Saugmäher nach einem der vorhergehenden Ansprüche, dadurch gekennzeichnet, dass er als Zusatzgerät zu einem herkömmlichen Motorrasenmäher (3) ausgebildet ist, wobei die Schneideinrichtung (7) und/oder die Einrichtung für das Erzeugen eines Saugluftstromes vorzugsweise durch einen Riemen (4a), eine Welle od.dgl. vom Motor des Motorrasenmähers (3) oder durch einen separaten z.B. hydraulischen Motor - gegebenenfalls über eine drehmomentabhängige Rutschkupplung - antreibbar ist.

6. Saugmäher nach Anspruch 1 oder 2 dadurch gekennzeichnet, dass das Messer (7) in dem Gehäuse (6) die Mäheinrichtung einer Motorsense (Freischneider) bildet.

7. Saugmäher nach einem der vorhergehenden Ansprüche, dass das Gehäuse (6) gegenüber der Gehäuseeintrittsöffnung (16) eine Gehäuseaustrittsöffnung (17) aufweist, die in Betriebsstellung in eine Grassammelvorrichtung (11) oder in ein Rasenmähergehäuse (3a) mündet oder dem Erdboden zugewandt ist.

8. Saugmäher nach einem der vorhergehenden Ansprüche, dadurch gekennzeichnet, dass die Gehäuseeintrittsöffnung (16) mit einer verstellbaren Abdeckung (9) verschliessbar und oder durch Stäbe (8), Gitter oder dgl. berührungsgeschützt ist.

9. Saugmäher nach einem der vorhergehenden Ansprüche, dadurch gekennzeichnet, dass die Gehäuseöffnung (16) im Bereich der vorderen oder hinteren Räder (12a) eines Rasenmähers insbesondere im Felgenraum eines Rades (12a) eines Rasenmähers angeordnet ist, und/oder dass das Gehäuse (6) schneckengehäuseförmig ausgebildet ist.

10. Saugmäher nach einem der vorhergehenden Ansprüche, dadurch gekennzeichnet, dass der Antrieb (4) der Schneideinrichtung bzw. des Messers (7) mit einer Sicherheitsabschaltvorrichtung versehen ist, die ein beidhändiges Führen des Saugmähers erforderlich macht, und/oder die Schneideinrichtung (7) abstoppt, sobald der Saugmäher nicht mehr vor- oder rückwärts bewegt wird.

## Claims

1. Vacuum mower with case (6)
a device for generating an air stream to transport cut off blades of grass (14) within the mower,
with an intake opening (16), as well as at least one cutting device immediately behind the intake opening (16) for cutting off the blades of grass,
with the cutting device having at least one blade (7),
and where in an operating position the minimum distance between the intake opening and the ground is kept by distance means so that in operating mode the intake opening will follow the contour of the ground, characterized in
that the plane as defined by the intake opening (16) in the operating position of the vacuum mower forms an angle of less than 80 degrees with the normal direction of growth of the grass blades (14)
and that the device for generating the air stream is powerful enough to make not yet cut grass in around the intake opening (16) bend into it to be cut there.

2. Vacuum mower as in claim 1, characterized in that the cutting device respectively the blade (7) is part of said device and is mechanically operated and when in operation preferably will create the air stream itself.

3. Vacuum mower as in claim 1, characterized in that the device for producing a vacuum generated air stream and the blade (7) are positioned in a particular tubular case (6) the knife (7) rotating freely on a bearing and being driven by said air stream.

4. Vacuum mower as in one of the above claims characterized in that the angle of application is less than 20 degrees and/or in which this angle can be varied by a special mechanism.

5. Vacuum mower as in one of the above claims and characterized in that it is designed to be attached to a conventional motor mower (3) wherein the cutting device (7) and/or the device for producing a vacuum air stream is preferably driven by a belt (4a), a shaft or the like by the motor of the motor mower (3) or by a separate - as for example hydraulic motor - possibly with a friction clutch regulated by the speed of rotation.

6. Vacuum mower as in claim 1 or 2 characterized in that the blade (7) running in a case (6) constitutes the mowing device of a motor scythe (freely movable cutter).

7. Vacuum mower as in one of the above claims characterized in that the casing (6) has an intake opening (16) opposite the discharge opening (17) which when in operation is oriented towards a grass collecting container (11), towards the case of a lawn mower (3a) or towards the ground.

8. Vacuum mower as in one of the above claims characterized in that the intake opening (16) of which has an adjustable cover (9) which may be closed completely or is protected by rods (8) or a grill, etc.

9. Vacuum mower as in one of the above claims characterized in that the intake opening (16) is placed in the area of the front or back wheels (12a) of a lawn mower, in particular in the area of the felloe of a wheel (12a) of a lawn mover and/or the casing (6) has a spiral shape.

10. Vacuum mower as in one of the above claims characterized in that the motor (4) of the cutting device, respectively the blade (7), is linked to a safety device that will kill the motor when lawn mower is not being pushed with both hands and/or which will stop the cutting device (7) as soon as the lawn mower is not being moved forwards or backwards.

## Revendications

1. Tondeuse aspirante avec un boîtier (6), un dispositif pour la production d'un courant d'air aspiré permettant le transport de brins d'herbe (14) à l'intérieur de la tondeuse
avec un orifice d'admission du boîtier (16) ainsi qu'au moins un dispositif pour couper les brins d'herbe et se situant immédiatement derrière l'orifice d'admission du boîtier (16),
le dispositif pour couper possède au moins une lame (7),
et pendant la mise en marche, l'écart minimal entre l'orifice d'admission du boîtier et le sol est limité par un système de maintien de l'écart de sorte que l'orifice d'admission du boîtier suit les contours du sol pendant le fonctionnement,
pendant la mise en marche de la tondeuse aspirante, la surface plane déterminée par l'orifice d'admission du boîtier(16) se situe dans un angle de moins de 80° à la direction normale de croissance des brins d'herbe (14),
et le dispositif de production du courant d'air aspiré est si puissant, que pendant la marche, de l'herbe n'étant pas encore coupée aux alentours s incline en direction de l'orifice d'admission du boîtier (16).

2. Tondeuse aspirante d'après la revendication 1, caractérisée par le fait que le dispositif pour couper, voire la lame (7), est une partie du dispositif mentionné, il est mis en marche par un mécanisme et en état de marche elle produit le courant d'air aspiré de préférence seule.

3. Tondeuse aspirante d'après la revendication 1, caractériseé par le fait que la dispositif pour la production du courant d'air aspiré et la lame (7) se trouvent dans un boîtier en forme de tuyau (6), la lame (7) est montée en roue libre et est mise en marche par le courant d'air aspiré.

4. Tondeuse aspirante d'après une des revendications précédentes, caractérisée par le fait que l'angle a moins de 20° et/ou pouvant varier grâce à un mécanisme de réglage.

5. Tondeuse aspirante d'après une des revendications précédentes caractérisée par le fait qu'elle peut être utilisée comme appareil supplémentaire à une tondeuse à gazon (3) traditionnel, le dispositif pour couper (7) et/ou le dispositif pour la production de courant d'air aspiré est mis en marche de préférence par une courroie (4a), un arbre ou quelque chose de semblable du moteur de la tondeuse à gazon (3), ou par un moteur hydraulique à part, le cas échéant au moyen d'un embrayage dépendant du couple de rotation.

6. Tondeuse aspirante d'après la revendication 1 ou 2, caractérisée par le fait que la lame (7) dans le boîtier (6) forme le dispositif de fauchage d'une faux à moteur (outil tranchant bougeant librement).

7. Tondeuse aspirante d'après une des revendications précédentes, caractérisée par le fait que le boîtier (6), qui se trouve en face de l'orifice d'admission du boîtier (16), dispose d'un orifice d'échappement du boîtier (17) qui débouche lors de la mise en marche dans un dispositif qui rassemble l'herbe (11) ou dans le boîtier d'une tondeuse à gazon (3a), ou bien il est dirigé vers le sol.

8. Tondeuse aspirante d'après une des revendications précédentes, caractérisée par le fait que l'orifice d'admission du boîtier (16) peut être obturé grâce à un système réglable (9) de fermeture et/ou est protégé par des barreaux (8), un treillis ou quelque chose de semblable.

9. Tondeuse aspirante d'après une des revendications précédentes, caractérisée par le fait que l'ouverture du boîtier (16) se trouve près des roues (12a) avant ou arrière d'une tondeuse à gazon, en particulier dans la partie intérieure de la jante d'une roue (12a) de tondeuse à gazon et/ou le boîtier (16) a la form d'une coquille d'escargot.

10. Tondeuse aspirante d'après une des revendications précédentes, caractérisée par le fait que la commande (4) du dispositif pour couper, voire de la lame (7), est équipée d'un système de sécurité qui interromp le mécanisme de marche, donc il est nécessaire de conduire la tondeuse aspirante à l'aide des 2 mains et le dispositif pour couper (7) s'arrête dès que la tondeuse aspirante ne se déplace plus ni vers l'avant, ni vers l'arrière.
